# EUROPEAN PATENT SPECIFICATION

(11) **EP 3 295 027 B1**
(45) Date of publication and mention of the grant of the patent: **04.06.2025**
(21) Application number: 16792857.1
(22) Date of filing: 12.04.2016
(51) Int. Cl.: F04B 35/04, F04B 39/00, F04B 39/02

(54) **RECIPROCATING COMPRESSOR**
HUBKOLBENVERDICHTER
COMPRESSEUR ALTERNATIF

(30) Priority: 11.05.2015 KR 20150065498
(43) Date of publication of application: 21.03.2018
(73) Proprietor: LG Electronics Inc., Seoul 07336 (KR)
(72) Inventor: HONG, Eonpyo, Seoul 08592 (KR); JEONG, Sangsub, Seoul 08592 (KR); PARK, Kyeongbae, Seoul 08592 (KR); PARK, Jungsik, Seoul 08592 (KR)
(74) Representative: Vossius & Partner Patentanwälte Rechtsanwälte mbB
(86) International application number: PCT/KR2016/003822
(87) International publication number: WO 2016/182211

(56) References cited:
- EP-A1- 2 594 792
- KR-A- 20020 068 633
- KR-A- 20090 105 471
- US-A1- 2003 095 879
- US-A1- 2006 087 180
- US-A1- 2006 210 411
- US-A1- 2012 207 628
- US-B1- 6 638 035

## Description

### Technical Field

The present disclosure relates to a reciprocating compressor, and more particularly, a reciprocating compressor capable of resonating a piston using magnetic energy.

### Background Art

In general, the reciprocating compressor is a type of compressor of sucking, compressing and discharging a refrigerant by linearly reciprocating a piston in a cylinder. The reciprocating compressors may be classified into a connection type and a vibration type according to a driving method of the piston.

In the connection type reciprocating compressor, a piston is connected to a rotation shaft of a driving motor via a connecting rod to compress a refrigerant while reciprocating in a cylinder. In the vibration type reciprocating compressor, the piston reciprocates in the cylinder and vibrates while connected with a mover of a reciprocating motor, thereby compressing a refrigerant. The present invention relates to the vibration type reciprocating compressor, and hereinafter, the vibration type reciprocating compressor is abbreviated as a reciprocating compressor.

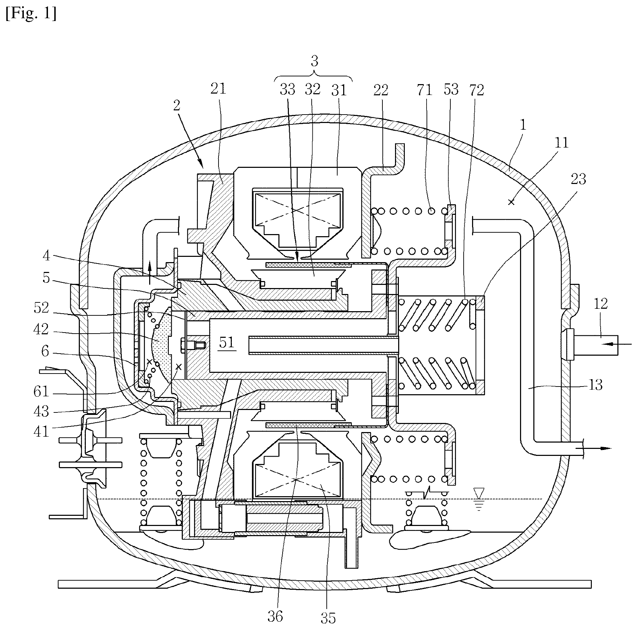

FIG. 1 is a sectional view of a reciprocating compressor according to the related art.

As illustrated in FIG. 1, the related art reciprocating compressor includes a frame 2 elastically installed in an inner space of a shell 1, a reciprocating motor 3 and a cylinder 4 both fixed to the frame 2, and a piston 5 coupled to a mover 33 of the reciprocating motor 3 and performing a reciprocating motion in the cylinder 4.

The cylinder 4 is provided with a compression space 41, and the piston 5 is provided with a suction passage 51. A suction valve 52 for opening and closing the suction passage 51 is installed at an end of the suction passage 51. A discharge valve 42 for opening and closing the compression space 41 of the cylinder 4 is installed at a front end surface of the cylinder 4. A discharge cover 6 having a discharge space 61 therein is coupled to the front end surface of the cylinder 4, and the discharge valve 42 is accommodated in the discharge space 61 of the discharge cover 6.

The inner space 11 of the shell 1 communicates with a suction pipe 12, and the discharge space 61 of the discharge cover 6 communicates with a discharge pipe 13 which is connected with an inlet of a condenser (not illustrated) of a refrigeration cycle device. Accordingly, suction pressure is generated in the inner space 11 of the shell 1. The suction passage 51 of the piston 5 communicates with the inner space 11 of the shell 1 so as to guide a refrigerant of suction pressure to be introduced into the compression space 41.

Meanwhile, one resonance spring 71, 72 which induces the piston 5 to resonate along with the mover 33 may be installed at one side in a motion direction of the piston 5, or one resonance spring or a plurality of resonance springs 71 and 72 may be installed at each of both sides in the motion direction of the piston 5. The resonance springs 71 and 72 may be implemented as a compression coil spring. When the resonance springs are installed at the both sides of the piston 5, one end of each of the resonance springs 71 and 72 may be supported, respectively, at front and rear side surfaces of a spring supporter 53 coupled to the piston 5, and another end of each of the both resonance springs 71 and 72 may be supported at a rear frame 22 supporting the stator 31, 32 of the reciprocating motor 3, and a back cover 23 coupled to the rear frame 22 and disposed at a rear side of the piston 5.

An unexplained reference numeral 21 denotes a front frame, 35 denotes a coil, 36 denotes a magnet, and 43 denotes a valve spring.

In the reciprocating compressor according to the related art, when power is supplied to the coil 35 of the reciprocating motor 3, the mover 33 of the reciprocating motor 3 performs a reciprocating motion. The piston 5 coupled to the mover 33 then fast reciprocates within the cylinder 4. Accordingly, a refrigerant is sucked into the inner space 11 of the shell 1 through the suction pipe 12. The refrigerant sucked into the inner space 11 of the shell 1 is introduced into the compression space 41 of the cylinder 4 through the suction passage 51 of the piston 5. The introduced refrigerant is then discharged from the compression space 41 into the discharge space 61 by pushing the discharge valve 42 during a forward motion of the piston 5, thereby flowing into a condenser of the refrigeration cycle through the discharge pipe 13. Such series of processes are repeated.

In this instance, the front resonance spring 71 and the rear resonance spring 72 which have the same spring constant are provided in plurality, respectively, at front and rear sides of the piston 5, so as to elastically support the piston 5. This may allow a power supply frequency (operating frequency) of the compressor to match a resonance frequency of the resonance spring at a specific cooling capacity, resulting in improvement of compressor efficiency.

EP 2 594 792 Al relates to a linear compressor with a small size and a light weight comprising a fixed member including a cylinder having a compression space defined therein, an inner stator installed on the outside of the cylinder, and an outer stator forming a pole in an air gap from the inner stator; and a moving member including a piston performing reciprocal linear motion into the compression space of the cylinder and compressing an operating fluid introduced into the compression space and a permanent magnet performing reciprocal linear motion with the piston due to a mutual electromagnetic force in the air gap between the inner stator and the outer stator.

US 2012/207628 A1 relates to a spring-less buried magnet linear-resonant motor including a buried magnet system and a stator operable to produce an alternating magnetic field exerting alternating axial forces on the buried magnet system that has a self-centering force and a required stiffness to reciprocate at a frequency near an alternating current (AC) supply frequency.

US 2006/087180 A1 relates to a bi-directional operating compressor using a transverse flux linear motor, the compressor comprising: a pair of stators including a plurality of U-shape upper stator iron cores and a plurality of U-shape lower stator iron cores, and a pair of neighboring circular winding coils; a rotor placed between the pair of stators including a plurality of permanent magnets connected to iron cores, a rotor center installed between a pair of structures facing each other, a pair of supports connected to both sides of the center, and a pair of pistons connected to one side of the support respectively; and a pair of cylinders provided facing the pistons at both side ends of the rotor, for compressing air in response to the reciprocating motion of the pistons.

### Disclosure of Invention

### Technical Problem

As such, in the related art reciprocating compressor, a vibrating body including the piston 5 is supported by a mechanical resonance spring which is a compression coil spring. However, the resonance frequency of the resonance spring is not allowed to be used within an operating frequency of a predetermined section (period) due to self-resonance which occurs in the coil spring in view of a characteristic of the coil spring.

In addition, the compression coil spring as the related art mechanical resonance spring 71, 72 has limits on mechanical stress, vibration distance and the like, which requires for predetermined wire diameter and length of the coil spring. This causes a limit in reducing a horizontal length of the compressor.

Furthermore, to install the compression coil spring as the related art mechanical resonance spring, the spring supporter 53 is disposed at the piston 5 and the back cover 23 is provided at the rear frame 22 supporting the stator 31, 32, so as to fix both ends of the resonance spring 71, 72 as the compression coil spring. This makes a device structure of the compressor complicated. Also, the plurality of resonance springs 71 and 72 should be installed at each of the front and rear sides of the piston 5 in a pressing manner with predetermined pressure. This causes a difficult assembly process.

### Solution to Problem

Therefore, an aspect of the detailed description is to provide a reciprocating compressor capable of overcoming a limit on a frequency to be usable within an operating frequency of a predetermined period.

Another aspect of the detailed description is to provide a reciprocating compressor capable of reducing a size of the compressor by reducing a length of a resonance spring in a reciprocating direction thereof.

Another aspect of the detailed description is to provide a reciprocating compressor, capable of reducing fabricating costs by simplifying a structure and an assembly process of resonance springs which enable a resonant motion of a piston with respect to a cylinder.
The invention is specified by the independent claim. Preferred embodiments are defined in the dependent claims. In the following description, although numerous features may be designated as optional, it is nevertheless acknowledged that all features comprised in the independent claim are not to be read as optional.

To achieve these and other advantages and in accordance with an example, there is provided a recip-
rocating compressor including a stator provided with a stator core with at least one air gap, and a coil generating magnetic energy, a mover provided with a magnet, and reciprocating with respect to the stator, and a piston coupled to the mover, wherein the magnet generates a magnetic level along with the stator core and resonates by a restoring force generated toward a side with a low magnetic level, and the piston is arranged such that a center of a stroke thereof is eccentric with respect to a center of the stator core in a reciprocating direction in an initially assembled state or a stopped state.

Here, the piston may be arranged to be eccentric toward a compression space in an assembled or stopped state.

The magnet may be arranged such that N-pole and S-pole are arranged by at least one, respectively, along a reciprocating direction of the magnet. A middle point between different poles of the magnet may be located more eccentric toward the compression space than a center of the air gap.

To achieve these and other advantages and in accordance with an embodiment of the present invention, as embodied and broadly described herein, there is provided a reciprocating compressor including a shell having an inner space, at least one stator provided with a stator core having at least one air gap, and a coil fixed to the stator core to generate magnetic energy in response to power supply, a mover provided with a magnet and reciprocating with respect to the stator, a piston mechanically connected with the mover, and reciprocating by the magnetic energy generated in the stator and interaction with the magnet, a cylinder having the piston inserted therein and forming a compression space, a suction valve opening and closing a suction side of the compression space, a discharge valve opening and closing a discharge side of the compression space, and an electromagnetic resonance spring formed between the stator and the magnet by a restoring force generated by the magnetic energy.

The electromagnetic resonance spring may allow the magnet to perform a resonant motion, in response to a force generated toward a side with a low magnetic level according to a difference of the magnetic level generated between the stator core and the magnet while the magnet moves according to a current supplied to the coil.

The stator may include an outer core disposed at an outer side and an inner core disposed at an inner side based on an air gap therebetween, and the magnet may be disposed to be movable between the outer core and the inner core.

The stator may include an outer core disposed at an outer side and an inner core disposed at an inner side based on an air gap therebetween, and the magnet may be coupled to the outer core or the inner core so as to be movable along with the coupled outer core or inner core.

An electromagnetic center of the magnet is located more eccentric toward the compression space than an electromagnetic center of the stator.

The magnet may be configured such that N-pole and S-pole are arranged by at least one, respectively, along a reciprocating direction of the piston, and the magnet may be located such that a contact point between different poles is more eccentric toward the compression space than the electromagnetic center of the stator.

The stator may have air gaps at both sides of the coil, respectively, and a center of the magnet may be located more eccentric toward the compression space than a center of the coil.

A maximum stroke range of the piston may be within a displacement at which the restoring force has an inflection point.

The electromagnetic resonance spring may be provided in plurality, arranged along a reciprocating direction of the piston.

Magnets having the same pole may be provided in a facing manner at one side surface of the piston in the reciprocating direction of the piston and a member corresponding to the piston, respectively.

To achieve these and other advantages and in accordance with an example,
there is provided a reciprocating compressor including a stator provided with a stator core having at least one air gap and a coil generating magnetic energy, a mover provided with a magnet and reciprocating with respect to the stator, a cylinder having an accommodation space therein, and a piston coupled to the mover, forming a compression space along with the cylinder, and performing a resonant motion as the magnet receives a restoring force generated due to a difference of a magnetic level generated in the air gap of the stator core.

Here, a maximum stroke range of the piston may be within a displacement at which the restoring force has an inflection point.

To achieve these and other advantages and in accordance with an example,
there is provided a reciprocating compressor including a stator provided with a stator core having at least one air gap, and a coil generating magnetic energy along with the stator core, a mover provided with a magnet and reciprocating with respect to the stator, and a piston coupled to the mover, wherein the magnet generates a magnetic level along with the stator core and performs a resonant motion along with the piston by a restoring force generated toward a side with a low magnetic level, wherein a second position of the piston is located more eccentric toward the compression space than a first position of the piston, under assumption that a point where an electromagnetic center of the magnet and an electromagnetic center of the stator match each other is referred to as the first position and a position of the piston in an assembled or stopped state is referred to as the second position.

### Advantageous Effects of Invention

In a reciprocating compressor according to the detailed description, a limit on a frequency to be usable within an operating frequency of a predetermined period can be prevented in advance by resonating a vibrating body using an electromagnetic resonance spring.

Also, a stress limit can be overcome by applying the electromagnetic resonant spring, and a vibration distance of the electromagnetic resonance spring and a vibration distance of a vibrating body including a piston can be the same as each other, which may result in a remarkable reduction of a horizontal length of the compressor.

In addition, a number of components for constructing a resonance spring can remarkably be reduced by utilizing a reciprocating motor as an electromagnetic coil spring, which may result in greatly simplifying a device structure and an assembly process of the compressor.

### Brief Description of Drawings

FIG. 1 is a sectional view of a reciprocating compressor according to the related art.
FIG. 2 is a longitudinal sectional view of a reciprocating compressor in accordance with the present invention.
FIG. 3 is a longitudinal sectional view of a reciprocating motor in the compressor according to FIG. 2.
FIGS. 4 to 9 are conceptual views illustrating effects of an electromagnetic resonance spring according to a flowing direction of a flux in the compressor according to FIG. 2.
FIG. 10 is a graph illustrating strength of a magnetic spring force for a position of a magnet.
FIGS. 11 to 15 are conceptual views illustrating effects of an electromagnetic resonance spring with respect to a 2 pole-1 gap structure in a reciprocating compressor in accordance with the present invention.
FIG. 16 is a longitudinal sectional view illustrating an apparatus of assembling a magnet in a manner of being eccentric toward a compression space by using a magnetic force in a reciprocating compressor in accordance with the present invention.
FIG. 17 is a longitudinal sectional view illustrating an assembled state that a magnet is eccentric toward a compression space by using a magnetic force when there are a plurality of stators, in a reciprocating compressor in accordance with the present invention.

### Best Mode for Carrying out the Invention

Hereinafter, description will be given in detail of a reciprocating compressor in accordance with one embodiment of the present invention illustrated in the accompanying drawings.

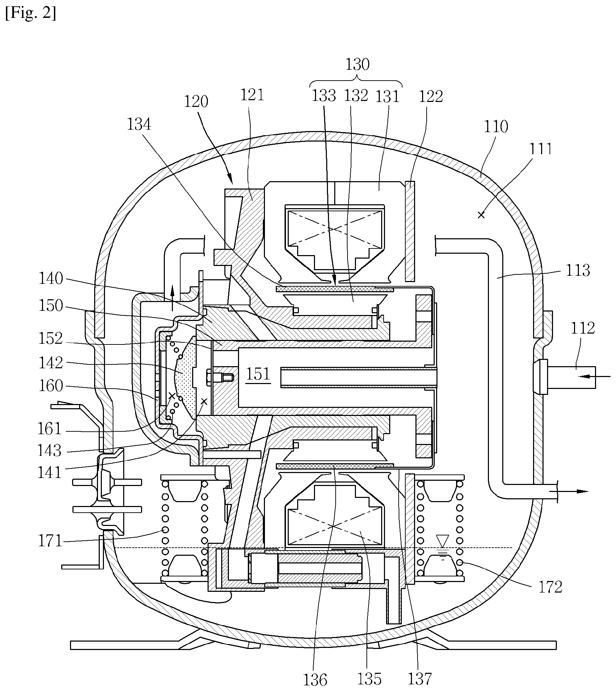

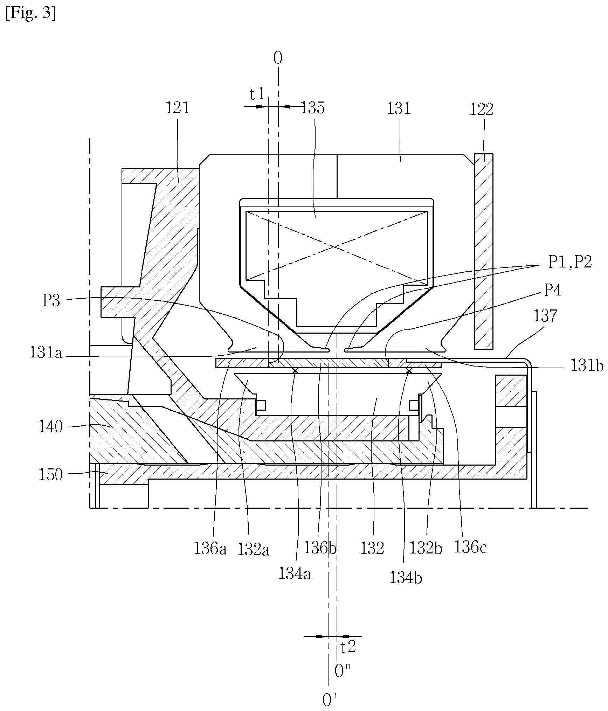

FIG. 2 is a longitudinal sectional view of a reciprocating compressor in accordance with the present invention, and FIG. 3 is a longitudinal sectional view of a reciprocating motor in the compressor according to FIG. 2.

As illustrated in FIGS. 2 and 3, in a reciprocating compressor according to the present invention, a suction pipe 112 may be connected to an inner space 111 of a hermetic shell 110, and a discharge pipe 123 through which a refrigerant compressed in a compression space 141 of a cylinder 140 to be explained later is guided into a refrigeration cycle may be disposed at one side of the suction pipe 112. Accordingly, the inner space 111 of the shell 110 may generate suction pressure by being filled with a refrigerant of suction pressure, and a refrigerant discharged from the compression space 141 may be discharged directly out of the shell 110 toward a condenser.

A frame 120 may be installed in the inner space 111 of the shell 110 by being elastically supported by a plurality of supporting springs 171 and 172. A reciprocating motor 130 may be fixed to one side surface of the frame 120. The reciprocating motor 130 may generate a reciprocating force and simultaneously induce a resonant motion of a piston 150 to be explained later.

The cylinder 140 which has the compression space 141 therein and is inserted into a front frame 121 of the frame 120 may be coupled at an inner side of the reciprocating motor 130. The piston 150 which compresses a refrigerant by varying a volume of the compression space 141 of the cylinder 140 may be inserted into the cylinder 140 to reciprocate in the cylinder 140.

A suction valve 152 opening and closing a suction passage 151 of the piston 150 may be coupled to a front end surface of the piston 150, and a discharge valve 142 opening and closing the compression space 141 of the cylinder 140 may be detachably coupled to a front end surface of the cylinder 140 in a manner of being covered with a discharge cover 160.

The discharge cover 160 may be provided with a discharge space 161 and fixed to the cylinder 140. The discharge valve 142 and a valve spring 143 supporting the discharge valve 142 may be accommodated in the discharge space 161. The discharge cover 160 may be coupled with the discharge pipe 113 such that the discharge space 161 and a condenser can be directly connected to each other through the discharge pipe 113.

The reciprocating motor 130 may include an outer stator 131, an inner stator 132, and a mover 133 performing a reciprocating motion in an air gap between the outer stator 131 and the inner stator 132.

The outer stator 131 may be coupled between the front frame 121 and a rear frame 122 to configure a part of a stator core. An annular coil 135 may be coupled to the outer stator 131. The coil 135 may alternatively be coupled to the inner stator 132.

The inner stator 132 may be disposed within the outer stator 131 with a predetermined gap 134 from the outer stator 131. The inner stator 132 may be coupled between both of the frames 121 and 122 to configure another part of the stator core.

The mover 133 may be disposed in the air gap 134 between the outer stator 131 and the inner stator 132. A magnet 136 corresponding to the coil 135 may be provided such that the mover 133 can perform a reciprocating motion in a flowing direction of a magnetic flux induced by the magnet 136 and the coil 135.

Here, a structure of the reciprocating motor 130 may be implicitly defined according to a number of the magnet and a number of air gaps between the outer stator and the inner stator. For example, a 3 pole-2 gap structure refers to a structure in which three magnets 136a, 136b and 136c are arranged between two air gaps to alternately have opposite poles in a reciprocating direction, and 2 pole-1 gap structure refers to a structure in which two magnets are arranged in one air gap to have opposite polarities in a reciprocating direction.

As illustrated in FIG. 3, for the 3 pole-2 gap structure, the outer stator 131 may have a cross section like '⊂' having a first pole portion 131a and a second pole portion 131b at both ends thereof. The inner stator 132 may have a cross section like '|' having a length corresponding to a length between outer ends of the both pole portions 131a and 131b in a radial direction. Both ends of the inner stator 132 may also form a first pole portion 132a and a second pole portion 132b. Accordingly, the outer stator 131 and the inner stator 132 may form gaps 134a and 134b (hereinafter, a front side close to the compression space may be referred to as a first gap, and a rear side may be referred to as second gap), respectively, at both sides in a reciprocating direction (front and rear directions) based on the coil 135.

It may be preferable that inner ends P1 and P2 of the pole portions 131a and 131b of the outer stator 131 are arranged close to each other in the aspects of minimizing a length of the magnet 136 and maximizing a gap length of the outer stator 131. Therefore, the pole portions 131a and 131b of the outer stator 131 may extend in an inclined manner such that the inner ends P1 and P2 extends toward the coil 135. In this instance, since the coil 135 is formed in the annular shape, the outer stator 131 may be formed in the shape of '⊂' by combining a shape of ' 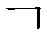 ' with a shape of a reverse ' 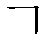 ,' or by combining a shape of ' 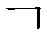 ' with a shape of ' 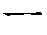 .'

The magnet 136 may be formed in a shape of a rectangular plate which has predetermined length and width and also has an arcuate cross section upon projected from a front side, thus to be coupled to an outer circumferential surface or an inner circumferential surface of a magnet holder 137, or have a cylindrical section to be inserted to the outer circumferential surface or the inner circumferential surface of the magnet holder 137.

The length of the magnet 136 in the reciprocating direction may be longer than the length of the outer stator 131 in the reciprocating direction. The magnet 136 may be configured to have one pole along the reciprocating direction. However, to increase a resonance spring effect by using the magnet, a plurality of poles may preferably be arranged in an alternating manner along the reciprocating direction so as to increase magnetic energy.

FIG. 3 illustrates an example in which the three magnets 136a, 136b and 136c are arranged to have different poles along the reciprocating direction. In this instance, one of an N-pole magnet and an S-pole magnet may be configured such that a length thereof in the reciprocating direction is longer than or equal to a stroke length of the piston 150 on the basis of an outer circumferential surface of the magnet 136. This may extend a range that the magnetic energy is applied to the magnet 136, thereby increasing a resonance-allowable range.

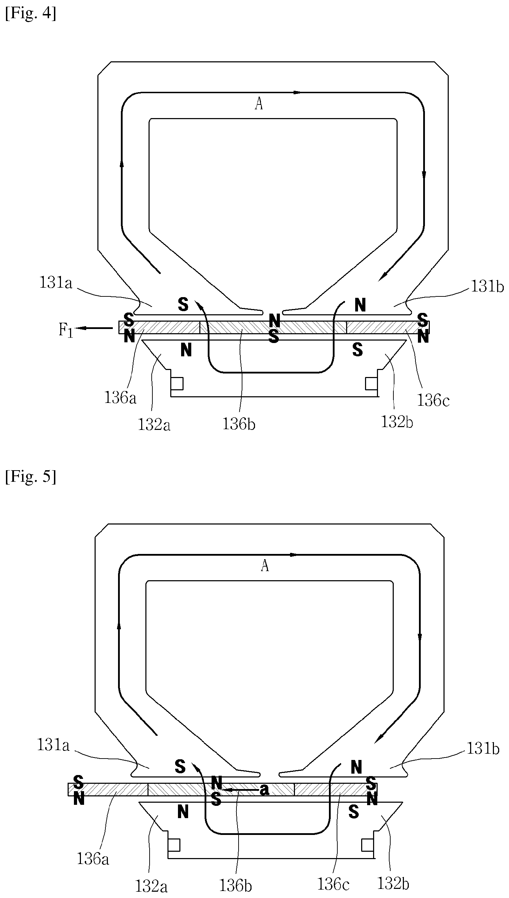

For example, as illustrated in FIG. 4, in case of arranging the magnets in an alternating order of S-N-S pole based on their outer circumferential surfaces, a sum of cross sections of both side magnets 136a and 136c (hereinafter, a left magnet is referred to as a first magnet, and a right magnet is referred to as a third magnet) may be the same as a cross section of a middle magnet 136b (hereinafter, referred to as a second magnet). A total length of the first and third magnets 136a and 136c or a length of the second magnet 136b may be longer than or equal to the stroke length of the piston 150. If the length of the magnet is shorter than the stroke length, the magnet may easily be deviated out of a range of an attractive magnetic force of the reciprocating motor. This may drastically lower a centering force of the coil and the core in the reciprocating direction, which is generated by the attractive magnetic force, which may interfere with a smooth reciprocating motion. Of course, in case where a total length of the magnets is shorter than an interval between both gaps, the magnets may not be deviated from the range of the attractive magnetic force even though the length of the magnets is shorter than the length of the stroke, but the magnetic fluxes may offset each other. This may cause an increase in an amount of unavailable magnetic flux, thereby lowering the centering force in the reciprocating direction.

The magnet 136 may preferably be configured such that a number of poles thereof can be the same as or at least one more than a number of the gap 134 of the stator core. If the number of poles of the magnet 136 is smaller than the number of the gap 134 of the stator core, it may be difficult to transfer the flux to the magnet 136 from at least one gap 134. Accordingly, an amount of invalid flux may increase, thereby lowering efficiency of the compressor.

And, the magnet 136 may preferably be configured such that contact points P3 and P4 between different poles belong to a range of the first gap 134a and the second gap 134b. More preferably, the contact point P3, P4 may be located to match a center of the air gap 134a, 134b, namely, a center of the stator pole portion so as to increase efficiency of the motor.

However, it may be more preferable that the contact point between the different poles of the magnet 136 is located to be slightly eccentric from the center of the pole portion 131a, 131b toward the compression space 141. This may compensate for a pushed amount of the piston 150 in advance, considering that the piston is pushed away from the compression space 141 by gas force, which is generated in the compression space during an operation. This may allow the piston 150 to always perform a stroke up to a top dead point.

To this end, the reciprocating motor 130 may be asymmetrically controlled such that an electromagnetic center of the magnet 136 is eccentric more toward the compression space 141 than the electromagnetic center of the stator 131, 132, or the cylinder 140 may be configured to be eccentric in a direction getting away from the compression space 141, considering the gas force. In case where the cylinder 140 is located eccentric, if a state that a stroke of the piston is symmetric in left and right directions based on the electromagnetic center of the stator is a first state and a left/right asymmetric state is a second state, the cylinder 140 may be located such that an end surface of the cylinder 140 is located closer to the stator than the position illustrated in FIG. 2 in the second state.

Here, the electromagnetic center of the magnet 136 may be a center of the middle second magnet, and the electromagnetic center of the stator may be a center of the coil. This may also be applied to the piston 150. If a matching point between the electromagnetic center of the magnet 136 and the electromagnetic center of the stator is referred to as a first position of the piston 150 and a position of the piston 150 in an assembled or stopped state is referred to as a second position of the piston 150, the second position of the piston 150 may be located more eccentric toward the compression space 141 than the first position of the piston 150.

For example, as illustrated in FIG. 3, the contact point P3 (also, P4) between the first magnet 136a and the second magnet 136b may be controlled to be located eccentric more toward the compression space 141 by a predetermined interval t1 than a center O of the first pole portion 131a corresponding to the contact point P3, or a center O' of the second magnet 136b may be controlled to be located more eccentric toward the compression space 141 by a predetermined interval t2 than a center O" of the stator core.

Meanwhile, the foregoing embodiment has exemplarily illustrated that the pole portions are formed only at both ends of the outer stator 131. However, a multi gap structure in which at least three pole portions are formed along a reciprocating direction and coils are disposed between adjacent pole portions may also be employed. Even in this instance, the center of the magnet may preferably be located more eccentric toward the compression space than the center of the pole portion.

Hereinafter, an operation of the reciprocating compressor according to this exemplary embodiment will be described.

That is, when an alternating current (AC) is applied to the coil 135 of the reciprocating motor 130, an alternating magnetic flux is generated between the outer stator 131 and the inner stator 132. The magnet 136 of the mover 133 which is placed in the gap between the outer stator 131 and the inner stator 132 then continuously reciprocates while moving along a flowing direction of the magnetic flux. Accordingly, the piston 140 coupled to the mover 133 sucks and compresses a refrigerant while reciprocating within the cylinder 140. The compressed refrigerant then opens the discharge valve in a pushing manner so as to be discharged into the discharge space 161. Such series of processes are repeatedly performed.

In this instance, while the magnet 136 reciprocates within the reciprocating motor 130, an electromagnetic resonance spring may be generated between the magnet 136 and the stator core, thereby inducing a resonant motion of the mover 133 and the piston 150. This may allow the piston 150 to compress the refrigerant by resisting the gas force generated in the compression space 141.

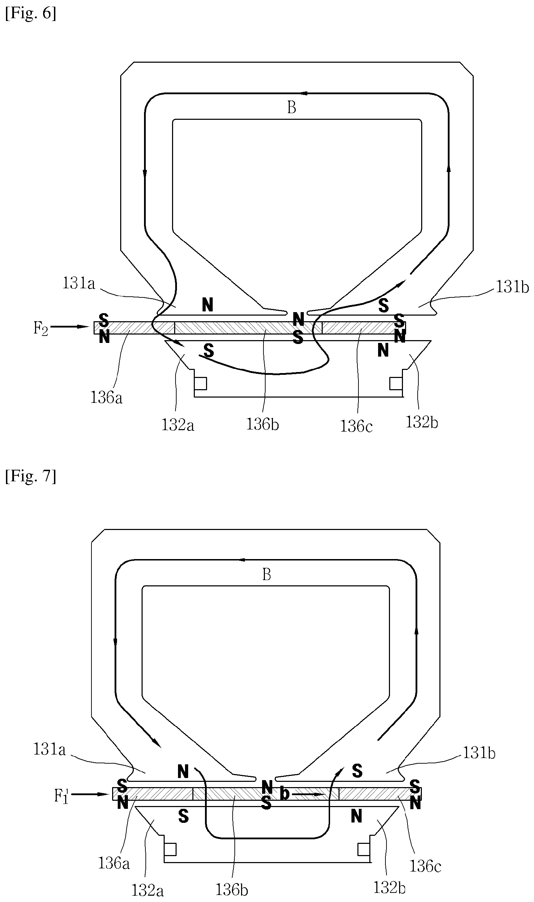

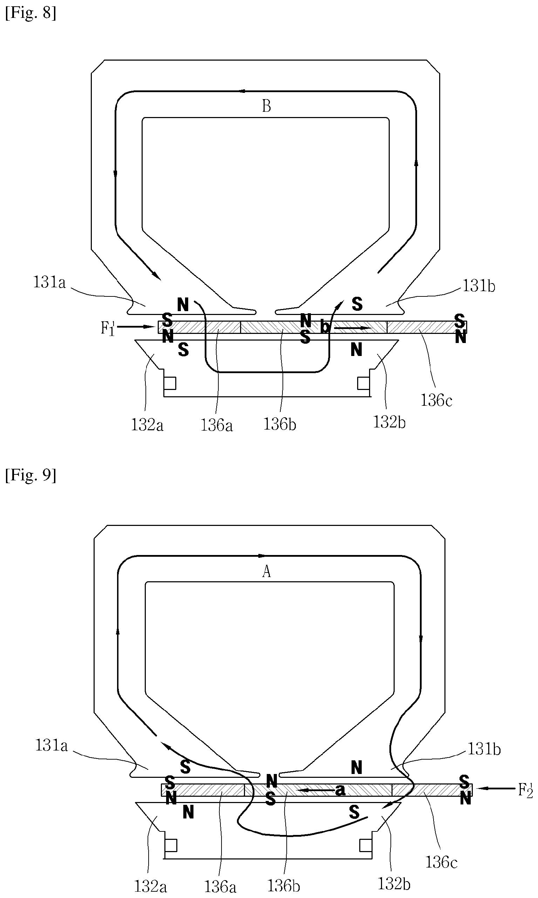

FIGS. 4 to 9 are conceptual views illustrating effects of an electromagnetic resonance spring based on a flowing direction of a flux in the compressor according to FIG. 2. FIGS. 4 and 5 are conceptual views illustrating a resonant motion of the magnet (piston) when a current flows in a clockwise direction, FIGS. 6 to 8 are conceptual views illustrating a resonant motion of the magnet (piston) when the current flows in a counterclockwise direction, and FIG. 9 is a conceptual view illustrating a resonant motion of the magnet (piston) when the current flows back in the clockwise direction. For reference, FIG. 3 illustrates an example in which the magnet is eccentric toward the compression space, but FIGS. 4 to 9 illustrate an example in which the center of the magnet matches the center of the stator without being eccentric, for the sake of explanation.

As illustrated in FIG. 4, when a flux which is generated in the outer stator 131 and the inner stator 132 in a direction of a current flowing along the coil 135 flows in a clockwise direction, namely, a direction A, the left first pole portion 132a of the inner stator 132 forms an N-pole and the right second pole portion 132b forms an S-pole, whereas the left first pole portion 131a of the outer stator 131 forms the S-pole and the right second pole portion 131b forms the N-pole. Accordingly, the first magnet 136a which has an inner circumferential surface with the N-pole and an outer circumferential surface with the S-pole and is located at a left end generates a repulsive force against the left pole portions 131a and 132a of the outer stator 131 and the inner stator 132. On the other hand, the second magnet 136b which has an inner circumferential surface with the S-pole and an outer circumferential surface with the N-pole and is located at the middle portion generates an attractive force with the left pole portions 131a and 132a of the stator 131, 132 and a repulsive force against the right pole portions 131b and 132b. Also, the third magnet 136c which has an inner circumferential surface with the N-pole and an outer circumferential surface with the S-pole and is located at the right end generates an attractive force with the right pole portions 131b and 132b of the stator 131, 132. Accordingly, the magnet 136 which has been located at the center of the stator 131, 132 may be moved to left in the drawing of FIG. 5, due by a force F₁, which is applied in a direction (a) (a direction toward a top dead point or a forward direction), as illustrated in FIG. 5, by the flowing direction of the flux and the magnetic flux generated by the magnet 136 as the mover 133.

In this instance, when the flux flows in a counterclockwise direction, namely, a direction B as illustrated in FIG. 6, the magnet 136 generates a force attracting the stator 131, 132. However, since the stator 131, 132 is fixed to the frame 120, a force F₂ trying to pull the magnet 136 toward the stator 131, 132 is applied to the magnet 136 by the attractive force. However, the force F₂ proportionally increases as the magnet 136 is getting away from the stator 131, 132, and thus serves as a type of spring force. This is referred to as a magnetic spring force. The magnetic spring force is generated toward a side, to which the magnetic flux can well flow due to low magnetic resistance, namely, a side with a low magnetic level. Accordingly, magnetic energy is accumulated between the magnet 136 and the stator 131, 132. The accumulated magnetic energy generates a restoring force along with the flux generated between the outer stator 131 and the inner stator 132. The restoring force allows the magnet 136 to resonate in a right direction (a direction toward a bottom dead point or a backward direction) which is an opposite direction to that illustrated in FIG. 5.

Accordingly, the magnet 136 which is located at the left side based on the outer stator 131 and the inner stator 132 due to the flowing direction of the flux and the magnetic flux generated by the magnet 136 is moved by a force F₁' applied in the right direction in the drawing, as illustrated in FIGS. 7 and 8.

Even in this instance, when the flux flows back in the clockwise direction, namely, the direction A as illustrated in FIG. 9, a magnetic spring force F₂' is generated toward a side with a low magnetic level in proportion to the magnet 136 getting away from the stator 131, 132. Accordingly, magnetic energy is accumulated between the magnet 136 and the stator 131, 132. The accumulated magnetic energy generates a restoring force along with the flux, which is generated between the outer stator and the inner stator 132 when a current supplied to the coil 135 flows in an opposite direction. Accordingly, the magnet 136 may perform a resonant motion in an opposite direction, namely, a direction (a).

Here, the magnetic spring force may not continuously increase as the magnet is getting away from the stator, but increase in a range belonging to the influence range of the magnetic flux and then may be drastically lowered when exceeding the range. That is, in the electromagnetic resonance spring, the restoring force which is generated by the magnetic energy between the stator and the magnet has an inflection point according to a displacement of the piston 150. It may be preferable to limit a maximum stroke range of the piston 150 within the displacement at which the inflection point of the restoring force is located. This may thusly increase efficiency of the electromagnetic resonance spring.

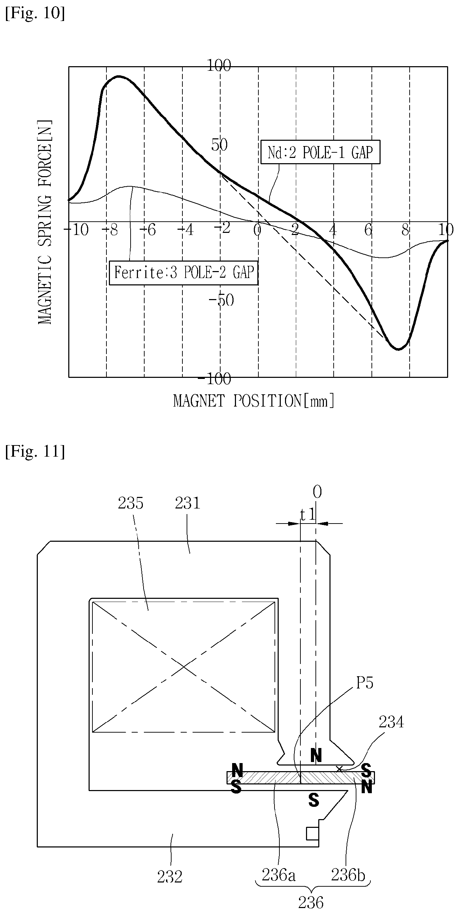

FIG. 10 is a graph illustrating strength of a magnetic spring force for a position of a magnet. As illustrated in FIG. 10, it can be noticed that the magnetic spring force is continuously increasing from zero (0) in an X-axial direction to a point of about ±7 mm in a back-and-forth direction in a 3 pole-2 gap structure with a ferrite magnet. However, it can also be noticed that the magnetic spring force is drastically lowered when the magnetic spring force of the magnet exceeds a predetermined range, namely, the range of ±7 mm. This may indicate that the magnetic spring force is generated only when the magnet is located within a range of the magnetic flux. Therefore, the piston may preferably be controlled to perform the stroke within a range that the magnet has a maximum magnetic spring force. This can be equally generated in a 2 pole-1 gap structure with an Nd magnet to be explained later.

Hereinafter, description will be given of another exemplary embodiment of a reciprocating motor in a reciprocating compressor according to the present invention.

That is, the foregoing embodiment has illustrated the 3 pole-2 gap structure that the outer stator and the inner stator have the gaps at both sides in the axial direction, respectively, and the magnet has the three poles. This exemplary embodiment, however, illustrates a 2 pole-1 gap structure that an outer stator 231 and an inner stator 232 are connected at one of both sides in an axial direction thereof and form a gap 234 at the other side and a magnet 236 has two poles. Here, considering the magnet 236, a left magnet in the drawing is referred to as a first magnet 236a and a right magnet is referred to as a second magnet 236b. The first magnet 236a may be magnetized such that an outer side surface thereof has an N-pole and an inner side surface has an S-pole. Opposite to the first magnet 236a, the second magnet 236b may be magnetized such that an outer side surface thereof has the S-pole and an inner side surface has the N-pole. In this instance, a contact point P5 of the magnet 236 may preferably be located more eccentric toward a compression space (a left side in the drawing) than a center (O) of a pole portion, taking into account gas force. Here, an electromagnetic center of the magnet may be a contact point between the two magnets and an electromagnetic center of the stator may be the center of the pole portion.

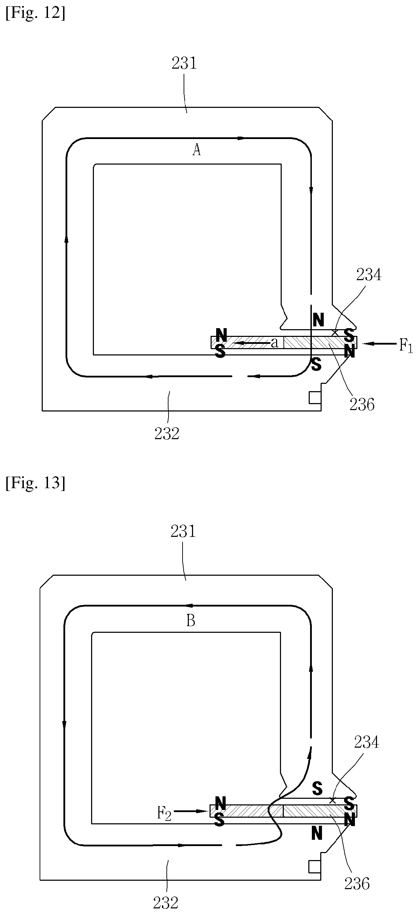

Even in this instance, when a flux which is generated in the outer stator 231 and the inner stator 232 along a direction of a current flowing on the coil 235 flows in a direction A, the magnet 236 which has been located at a center of the outer stator 231 is moved by a force F₁ applied in a direction (a), as illustrated in FIG. 12, by the flowing direction of the flux and the magnetic flux generated by the magnet 236.

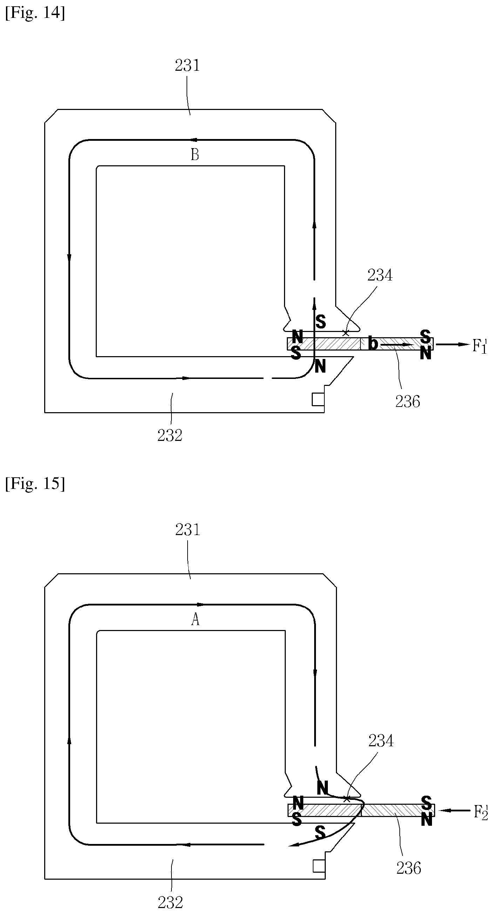

In this instance, when the flux flows in a counterclockwise direction as illustrated in FIG. 13, the magnet 236 is affected by a force F₂ trying to pull the magnet 236 toward the stator. Accordingly, as described in the foregoing embodiment, as the magnet 236 is getting away from the stator 231, 232, the magnetic spring force is generated toward a side with a low magnetic level up to a predetermined range, and accordingly magnetic energy is accumulated between the magnet and the stator. The accumulated magnetic energy generates a restoring force along with the flux generated between the outer stator 231 and the inner stator 231 when the current supplied to a coil 235 flows in an opposite direction. The restoring force may allow the magnet to resonate in a direction (b) (a direction toward a bottom dead point or a backward direction), which is opposite to the direction in FIG. 12. That is, when the flux generated in the outer stator 231 and the inner stator 232 flows in a counterclockwise direction, namely, a direction B, the magnet 236 which has been moved to left in the drawing based on the outer stator 231 due to the flowing direction of the flux and the magnetic flux generated by the magnet 236 may be moved in a direction (b) while performing a resonant motion, as illustrated in FIG. 14, by a centering force generated by an attractive magnetic force between the coil and the core and a force F₂ generated by the flux.

When the flux flows in the clockwise direction, namely, the direction A as illustrated in FIG. 15, a magnetic spring force F₂' is generated between the magnet 236 and the stator 231, 232 toward a side with a low magnetic level, and accordingly, magnetic energy is accumulated between the magnet 236 and the stator 231, 232. The accumulated magnetic energy generates a restoring force along with the flux generated between the outer stator 231 and the inner stator 232, such that the magnet 236 can strongly resonate in a direction (a) as an opposite direction to that illustrated in FIG. 14.

Even in this instance, the magnetic spring force may not continuously increase as the magnet is getting away from the stator, but increase within an influence range of the magnetic flux and then be drastically lowered when exceeding the range. This has been described in relation to FIG. 10.

As such, in a reciprocating compressor in which a piston compresses a refrigerant while reciprocating in a cylinder, in order for a vibrating body including the piston to efficiently compress a refrigerant by resisting gas force, a resonance spring is required for resonating the vibrating body. However, upon applying the mechanical resonance spring as applied in the related art, a specific frequency cannot be used at an operating frequency of a predetermined period, in view of the characteristic of the coil spring. However, when allowing the vibrating body to perform a resonant motion by using an electromagnetic resonance spring as illustrated in the embodiment according to the present invention, every frequency can be used at an operating frequency of a predetermined period. This may result in increasing an operation band of the compressor, improving compressor efficiency and enabling an efficient operation of a product employing such compressor.

Also, upon applying the electromagnetic resonance spring, compared with employing the mechanical resonance spring such as a compression coil spring, there may not be any limit on mechanical stress and a vibrating distance of the electromagnetic resonance spring can match a vibrating distance of the vibrating body including the piston, which may result in reducing a horizontal length of the compressor.

In addition, as the reciprocating motor is used as the electromagnetic resonance spring, a remarkable reduction of a number of components can be achieved, as compared with employing the compression coil spring as a resonance spring, which may allow for a remarkable simplification of a device structure and an assembly process of the compressor.

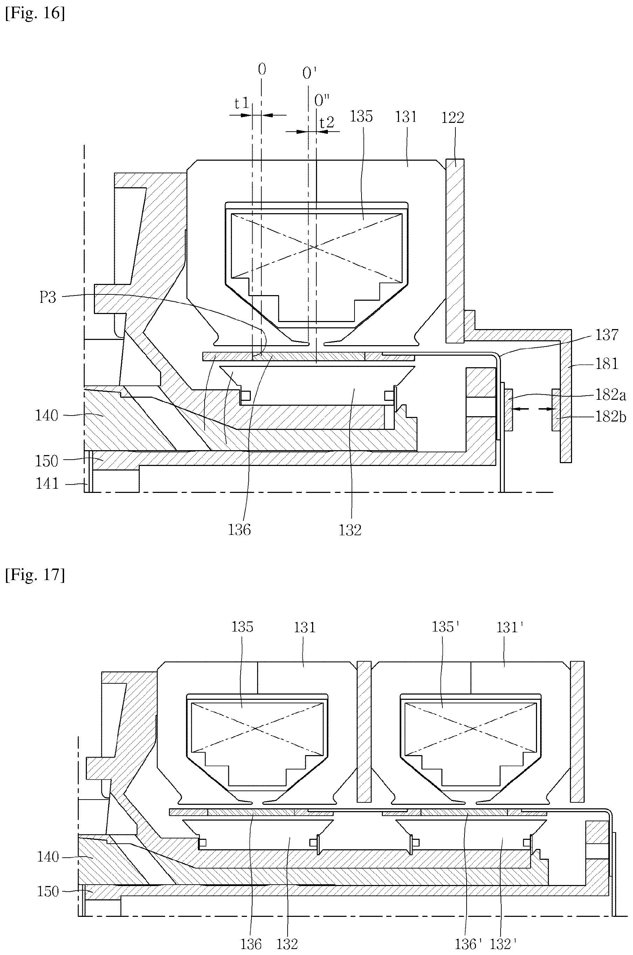

Meanwhile, FIG. 16 is a longitudinal sectional view illustrating an apparatus of assembling a magnet in a manner of being eccentric toward a compression space by a magnetic force in a reciprocating compressor in accordance with the present invention.

As illustrated in FIG. 16, a bracket 181 may be coupled to the rear frame 122, and auxiliary magnets 182a and 182b having the same pole may be disposed at an inner side surface (front surface) of the bracket 181 and a rear surface of a flange of the piston 140 facing the inner side surface, such that the piston 150 and the magnet 136 as the vibrating bodies can be assembled to be slightly eccentric toward the compression space 141 by a repulsive force between the both auxiliary magnets 182a and 182b. An unexplained reference numeral 131 denotes an outer stator, 132 denotes an inner stator, 135 denotes a coil, O denotes a center of a pole portion, O' denotes a center of a second magnet, and O" denotes a center of the coil.

To this end, during the operation of the compressor, the piston 150 can be moved as much as being pushed out due to gas force generated in the compression space 141, which may allow a stroke of the piston to be carried out between a top dead point and a bottom dead point, thereby preventing compressor efficiency from being lowered.

Meanwhile, as illustrated in FIG. 17, when the stator is provided in plurality, the same effect as those in the foregoing embodiments can be obtained.

That is, a plurality of outer stators 131 and 131' may be arranged alongside in a reciprocating direction of the piston 150, and inner stators 132' corresponding to the outer stators 131 and 131', respectively, may be arranged at an inner side of each outer stator 131 and 131' in the reciprocating direction of the piston 150.

A plurality of magnets 136 and 136' may be arranged in gaps between the outer stators 131 and 131' and the inner stator 132 and 132', respectively.

Here, the outer stators 131 and 131', the inner stators 132 and 132' and the magnets 136 and 136' are the same as those in the embodiment illustrated in FIGS. 2 and 3, so detailed description thereof will be omitted. Reference numerals 135 and 135' denote a coil, and 140 denotes a cylinder.

In this manner, when the plurality of stators and magnets are arranged alongside in the reciprocating direction of the piston, a compressor capacity can increase and an electromagnetic resonant spring force can also increase. This can more improve a performance of the compressor than an embodiment employing one stator, and thus be appropriate for a large-capacity compressor.

Meanwhile, although not illustrated, a separate electromagnetic resonance spring may additionally be disposed at a rear side of the piston.

Even in this case, a spring holder in a cylindrical shape may be provided at a rear side of the magnet holder and one or a plurality of magnets for spring may be coupled to an outer circumferential surface of the spring holder.

A back cover may be coupled to a rear side of a frame supporting the stator, and a stator for spring forming the electromagnetic resonance spring along with the magnets for spring may be coupled to a front side of the back cover.

The stator for spring may be formed in a shape similar to or the same as those of the outer stator and the inner stator which construct the reciprocating motor. That is, the stator for spring may be implemented in a 2-gap shape in a manner of having a shape with pole portions at both ends thereof, similar to the outer stator of the reciprocating motor, or implemented in a 1-gap shape having only one end with a pole portion and another end connected to the inner stator.

Three of such magnet may be alternately arranged, similar to the aforementioned magnets of the reciprocating motor, to form the electromagnetic resonance spring with the 3 pole-2 gap structure, or two of such magnet may be alternately arranged to form an electromagnetic resonance spring with a 2 pole-1 gap structure.

An operation effect of the reciprocating compressor may be the same as or similar to the aforementioned embodiments. However, this embodiment may increase an entire size and fabricating costs of the compressor further including the spring holder and the magnets for spring, but can increase the spring force and enhance compression efficiency accordingly by virtue of the additional electromagnetic resonance spring in addition to the electromagnetic resonance spring of the reciprocating motor.

Meanwhile, although not illustrated, an electromagnetic resonance spring may be formed even in an embodiment that the magnet is integrally coupled to the inner stator.

That is, the foregoing embodiments have illustrated that the magnet is located in the gap between the outer stator and the inner stator and reciprocates along with the mover, but this embodiment can illustrate that the magnet is coupled to an outer circumferential surface of the inner stator and accordingly the piston reciprocates along with the inner stator.

A basic configuration of the reciprocating compressor and an operation effect thereof according to this embodiment are the same as or similar to the foregoing embodiments. However, in this instance, as the magnet is coupled to the inner stator, it may be facilitated to manage a clearance between the inner stator and the mover and to match concentricity among the inner stator, the mover and the piston.

## Claims

1. A reciprocating compressor comprising:
a shell (110) having an inner space (111);
at least one stator (131,132) (231,232) disposed in the inner space (111) of the shell (110), and provided with a stator core having at least one air gap (134), and a coil (135) fixed to the stator core and generating magnetic energy in response to power applied;
a mover (133) provided with a magnet (136,136a,136b,136c) (236,236a,236b) and reciprocating with respect to the stator (131,132);
a piston (150) mechanically connected with the mover (133), and reciprocating by the magnetic energy generated in the stator and interaction with the magnet (136,136a,136b,136c) (236,236a,236b);
a cylinder (140) having the piston (150) inserted therein and forming a compression space (141);
a suction valve (152) opening and closing a suction side of the compression space;
a discharge valve (142) opening and closing a discharge side of the compression space; and
an electromagnetic resonance spring (130) formed between the stator core and the magnet by a restoring force generated by the magnetic energy,
**characterized in that** an electromagnetic center of the magnet is located more eccentric toward the compression space (141) than an electromagnetic center of the stator.

2. The reciprocating compressor of claim 1, wherein the electromagnetic resonance spring (130) generates a difference of a magnetic level generated between the stator core and the magnet (136,136a,136b,136c) (236,236a,236b) while the magnet moves according to a current supplied to the coil (135) (235), such that the magnet resonates, in response to a force generated toward a side with a low magnetic level.

3. The reciprocating compressor of claim 2, wherein the stator (131,132) (231,232) comprises an outer core (131) (231) disposed at an outer side and an inner core (132) (232) disposed at an inner side based on an air gap (134) (234) therebetween, and
wherein the magnet (136,136a,136b,136c) (236,236a,236b) is disposed to be movable between the outer core (131) (231) and the inner core (132) (232).

4. The reciprocating compressor of claim 2, wherein the stator (131,132) (231,232) comprises an outer core (131) (231) disposed at an outer side and an inner core (132) (232) disposed at an inner side based on an air gap (134) (234) therebetween, and
wherein the magnet (136,136a,136b,136c) (236,236a,236b) is coupled to the outer core (131) (231) or the inner core (132) (232) so as to be movable along with the coupled outer core or inner core.

5. The reciprocating compressor of any one of claims 1 to 4, wherein the magnet (136,136a,136b,136c) (236,236a,236b) is configured such that N-pole and S-pole are arranged by at least one, respectively, along a reciprocating direction of the piston (150), and
wherein the magnet (136,136a,136b,136c) (236,236a,236b) is located such that a contact point between different poles is more eccentric toward the compression space (141) than the electromagnetic center of the stator.

6. The reciprocating compressor of any one of claims 1 to 5, wherein the stator has air gaps (134a,134b) at both sides of the coil (135), and
wherein a center of the magnet (136,136a,136b,136c) is located more eccentric toward the compression space (141) than a center of the coil (135).

7. The reciprocating compressor of any one of claims 1 to 5, wherein the stator (231,232) has one air gap (234) at one side of the coil (235) and another side of the coil (235) forms a magnetic path, and
wherein a center of the magnet (236,236a,236b) is located more eccentric toward the compression space (141) than a center of a pole portion forming the air gap (234).

8. The reciprocating compressor of any one of claims 1 to 7, wherein a maximum stroke range of the piston (150) is within a displacement at which the restoring force has an inflection point.

9. The reciprocating compressor of any one of claims 1 to 8, wherein the electromagnetic resonance spring (131,132,135,136) (131',132',135',136') is provided in plurality, the plurality of electromagnetic resonance springs being arranged along the reciprocating direction of the piston (150).

10. The reciprocating compressor of any of claims 1 to 9, wherein auxiliary magnets (182a, 182b) having the same pole are provided in a facing manner at one side surface of the piston (150) in the reciprocating direction of the piston (150) and a member corresponding to the piston (150), respectively.

11. The reciprocating compressor of claim 10, wherein a bracket (181) is coupled to a rear frame (122) coupled to the stator, and
wherein the auxiliary magnets (182a, 182b) are disposed at an inner side surface of the bracket (181) and a rear surface of a flange of the piston (150) facing the inner side surface of the bracket (181), respectively.

12. The reciprocating compressor of claim 1, wherein the piston (150) forming a compression space (141) along with the cylinder (140), and performing a resonant motion as the magnet (136,136a,136b,136c) (236,236a,236b) receives a restoring force generated due to a difference of a magnetic level generated in the air gap (134,134a,134b) (234)of the stator core.

13. The reciprocating compressor of claim 12, wherein a maximum stroke range of the piston (150) is within a displacement at which the restoring force has an inflection point.

14. The reciprocating compressor of claim 13,
wherein a second position of the piston is located more eccentric toward the compression space (141) than a first position of the piston (150), under assumption that a point where an electromagnetic center of the magnet (136,136a,136b,136c) (236,236a,236b) and an electromagnetic center of the stator (131,132) (231) (232) match each other is referred to as the first position and a position of the piston (150) in an assembled or stopped state is referred to as the second position.

## Patentansprüche

1. Hubkolbenverdichter, der aufweist:
einen Mantel (110), der einen Innenraum (111) hat;
mindestens einen Stator (131, 132) (231, 232), der im Innenraum (111) des Mantels (110) angeordnet ist, und mit einem Statorkern vorgesehen ist, der mindestens einen Luftschlitz (134) hat, und eine Spule (135), die am Statorkern befestigt ist und magnetische Energie in Antwort auf angelegten Strom erzeugt;
einen Beweger (133), der mit einem Magneten (136, 136a, 136b, 136c) (236, 236a, 236b) vorgesehen ist und sich bezüglich des Stators (131, 132) hin- und herbewegt.
einen Kolben (150), der mechanisch mit dem Beweger (133) verbunden ist und sich durch die im Stator erzeugte magnetische Energie und der Interaktion mit dem Magneten (136, 136a, 136b, 136c) (236, 236a, 236b) hin und her bewegt;
einen Zylinder (140), der darin einen Kolben (150) eingesetzt hat und einen Verdichtungsraum (141) bildet;
ein Ansaugventil (152), das eine Ansaugseite des Verdichtungsraums öffnet und schließt;
ein Ausgabeventil (142), das eine Ausgabeseite des Dichtungsraums öffnet und schließt; und
eine elektromagnetische Resonanzfeder (130), die zwischen dem Statorkern und dem Magneten durch eine Rückstellungskraft ausgebildet wird, die von der magnetischen Energie erzeugt wird,
**dadurch gekennzeichnet, dass**
ein elektromagnetischer Mittelpunkt des Magneten sich weiter außerhalb der Mitte in Richtung des Verdichtungsraums (141) als ein elektromagnetischer Mittelpunkt des Stators befindet.

2. Hubkolbenverdichter nach Anspruch 1, wobei die elektromagnetische Resonanzfeder (130) einen Unterschied eines Magnetniveaus erzeugt, das zwischen dem Statorkern und dem Magneten (136, 136a, 136b, 136c) (236, 236a, 236b) erzeugt wird, während sich der Magnet gemäß dem der Spule (135) (235) zugeleiteten Strom bewegt, sodass der Magnet in Antwort auf eine Kraft, die in Richtung einer Seite mit einem niedrigen magnetischen Niveau erzeugt wird, schwingt.

3. Hubkolbenverdichter nach Anspruch 2, wobei der Stator (131, 132) (231 232) einen äußeren Kern (131) (231) aufweist, der an einer Außenseite angeordnet ist, und einen inneren Kern (132) (232), der an einer Innenseite basierend auf einem Luftschlitz (134) (234) dazwischen angeordnet ist, und
wobei der Magnet (136, 136a, 136b, 136c) (236, 236a, 236b) angeordnet ist, um zwischen dem äußeren Kern (131) (231) und dem inneren Kern (132) (232) bewegbar zu sein.

4. Hubkolbenverdichter nach Anspruch 2, wobei der Stator (131, 132) (231 232) einen äußeren Kern (131) (231) aufweist, der an einer Außenseite angeordnet ist, und einen inneren Kern (132) (232), der an einer Innenseite basierend auf einem Luftschlitz (134) (234) dazwischen angeordnet ist, und
wobei der Magnet (136, 136a, 136b, 136c) (236, 236a, 236b) mit dem äußeren Kern (131) (231) oder dem inneren Kern (132) (232) gekoppelt ist, um so zusammen mit dem gekoppelten äußeren Kern oder inneren Kern bewegbar zu sein,

5. Hubkolbenverdichter nach einem der Ansprüche 1 bis 4, wobei der Magnet (136, 136a, 136b, 136c) (236, 236a, 236b) so konfiguriert ist, dass der N-Pol und der S-Pol jeweils in mindestens einer Hin- und Herbewegungsrichtung des Kolbens (150) angeordnet sind, und
wobei der Magnet (136, 136a, 136b, 136c) (236, 236a, 236b) angeordnet ist, sodass sich ein Kontaktpunkt zwischen den verschiedenen Polen weiter außerhalb der Mitte in Richtung des Verdichtungsraums (141) als der elektromagnetische Mittelpunkt des Stators befindet.

6. Hubkolbenverdichter nach einem der Ansprüche 1 bis 5, wobei der Stator Luftschlitze (134a, 134b) an beiden Seiten der Spule (135) aufweist, und
wobei sich ein Mittelpunkt des Magneten (136, 136a, 136b, 136c) weiter außerhalb der Mitte in Richtung des Verdichtungsraums (141) als ein Mittelpunkt der Spule (135) befindet.

7. Hubkolbenverdichter nach einem der Ansprüche 1 bis 5, wobei der Stator (231, 232) einen Luftschlitz (234) an einer Seite der Spule (235) hat und eine andere Seite der Spule (235) einen Magnetpfad bildet, und
wobei sich ein Mittelpunkt des Magneten (236, 236a, 236b) weiter außerhalb der Mitte in Richtung des Verdichtungsraums (141) als ein Mittelpunkt eines Polbereichs, der den Luftschlitz (234) bildet, befindet.

8. Hubkolbenverdichter nach einem der Ansprüche 1 bis 7, wobei ein maximaler Hubbereich des Kolbens (150) innerhalb einer Versetzung liegt, an der die Rückstellungskraft einen Knickpunkt hat.

9. Hubkolbenverdichter nach einem der Ansprüche 1 bis 8, wobei
die elektromagnetische Resonanzfeder (131, 132, 135, 136) (131', 132', 135', 136') in mehrfacher Ausführung vorgesehen ist, wobei die mehreren elektromagnetischen Resonanzfedern entlang der Hin- und Herbewegungsrichtung des Kolbens (150) angeordnet sind.

10. Hubkolbenverdichter nach einem der Ansprüche 1 bis 9, wobei
Hilfsmagneten (182a, 182b), die den gleichen Pol haben, in zugewandter Weise an einer Seitenfläche des Kolbens (150) in der Hin- und Herbewegungsrichtung des Kolbens (150) vorgesehen sind und ein Element jeweils dem Kolben (150) entspricht.

11. Hubkolbenverdichter nach Anspruch 10, wobei eine Klammer (181) mit einem mit dem Stator gekoppelten rückseitigen Rahmen (122) gekoppelt ist, und
wobei die Hilfsmagneten (182a, 182b) an einer Innenseitenfläche der Klammer (181) und an einer rückseitigen Fläche eines Flansches des Kolbens (150) vorgesehen sind, der der Innenseitenfläche der Klammer (181) jeweils zugewandt ist.

12. Hubkolbenverdichter nach Anspruch 1, wobei der Kolben (150) einen Verdichtungsraum (141) zusammen mit dem Zylinder (140) bildet und eine Schwingungsbewegung durchführt, wenn der Magnet (136, 136a, 136b, 136c) (236, 236a, 236b) eine Rückstellungskraft empfängt, die aufgrund eines Unterschieds eines im Luftschlitz (134, 134a, 134b) (234) des Statorkerns erzeugten Magnetniveaus erzeugt wird.

13. Hubkolbenverdichter nach Anspruch 12, wobei der maximale Hubbereich des Kolbens (150) innerhalb einer Versetzung liegt, an der die Rückstellungskraft einen Knickpunkt hat.

14. Hubkolbenverdichter nach Anspruch 13, wobei
eine zweite Position des Kolbens sich weiter außerhalb der Mitte in Richtung des Verdichtungsraums (141) als eine erste Position des Kolbens (150) befindet, unter der Annahme, dass ein Punkt, an dem ein elektromagnetischer Mittelpunkt des Magneten (136, 136a, 136b, 136c) (236, 236a, 236b) und ein elektromagnetischer Mittelpunkt des Stators (131,132) (231) (232) miteinander übereinstimmen, als die erste Position bezeichnet wird, und eine Position des Kolbens (150) in einem montierten oder angehaltenen Zustand als die zweite Position bezeichnet wird.

## Revendications

1. Compresseur à va-et-vient comprenant :
une coque (110) ayant un espace intérieur (111) ;
au moins un stator (131,132) (231,232) disposé dans l'espace intérieur (111) de la coque (110), et pourvu d'un noyau de stator ayant au moins un intervalle d'air (134), et une bobine (135) fixée sur le noyau de stator et générant une énergie magnétique en réponse à une puissance appliquée ;
un mécanisme (133) pourvu d'un aimant (136,136a,136b,136c) (236,236a,236b) et effectuant des mouvements de va-et-vient par rapport au stator (131,132) ;
un piston (150) connecté mécaniquement au mécanisme (133), et effectuant des mouvements de va-et-vient via l'énergie magnétique générée dans le stator et l'interaction avec l'aimant (136,136a,136b,136c) (236,236a,236b) ;
un cylindre (140) ayant le piston (150) inséré à l'intérieur de celui-ci et formant un espace de compression (141) ;
une vanne d'aspiration (152) ouvrant et fermant un côté aspiration de l'espace de compression ;
une vanne de décharge (142) ouvrant et fermant un côté de décharge de l'espace de compression ; et
un ressort à résonance électromagnétique (130) formé entre le noyau de stator et l'aimant via une force de rappel générée par l'énergie magnétique,
**caractérisé en ce qu'**un centre électromagnétique de l'aimant est situé de manière plus excentrée par rapport à l'espace de compression (141) qu'un centre électromagnétique du stator.

2. Compresseur à va-et-vient selon la revendication 1, dans lequel le ressort à résonance électromagnétique (130) génère une différence de niveau magnétique généré entre le noyau de stator et l'aimant (136,136a,136b,136c) (236,236a,236b) tandis que l'aimant se déplace en accord avec un courant alimenté à la bobine (135) (235), de sorte que l' aimant est en résonance, en réponse à une force générée vers un côté avec un niveau magnétique faible.

3. Compresseur à va-et-vient selon la revendication 2, dans lequel le stator (131,132) (231,232) comprend un noyau extérieur (131) (231) disposé au niveau d'un côté extérieur et un noyau intérieur (132) (232) disposé au niveau d'un côté intérieur sur la base d'un intervalle d'air (134) (234) entre ceux-ci, et
dans lequel l'aimant (136,136a,136b,136c) (236,236a,236b) est disposé pour être mobile entre le noyau extérieur (131) (231) et le noyau intérieur (132) (232).

4. Compresseur à va-et-vient selon la revendication 2, dans lequel le stator (131,132) (231,232) comprend un noyau extérieur (131) (231) disposé au niveau d'un côté extérieur et un noyau intérieur (132) (232) disposé au niveau d'un côté intérieur sur la base d'un intervalle d'air (134) (234) entre ceux-ci, et
dans lequel l'aimant (136, 136a, 136b, 136c) (236,236a,236b) est couplé au noyau extérieur (131) (231) ou au noyau intérieur (132) (232) de façon à être mobile conjointement avec le noyau extérieur ou le noyau intérieur couplés.

5. Compresseur à va-et-vient selon l'une quelconque des revendications 1 à 4, dans lequel
l'aimant (136,136a, 136b, 136c) (236,236a,236b) est configuré de sorte que le pôle N et le pôle S sont agencés à raison d'au moins un, respectivement, le long d'une direction de va-et-vient du piston (150), et
dans lequel l'aimant (136,136a, 136b, 136c) (236,236a,236b) est situé de sorte qu'un point de contact entre différents pôles est plus excentré par rapport à l'espace de compression (141) que le centre électromagnétique du stator.

6. Compresseur à va-et-vient selon l'une quelconque des revendications 1 à 5, dans lequel le stator a des intervalles d'air (134a,134b) au niveau des deux côtés de la bobine (135), et
dans lequel un centre de l'aimant (136,136a, 136b, 136c) est situé de manière plus excentrée par rapport à l'espace de compression (141) qu'un centre de la bobine (135).

7. Compresseur à va-et-vient selon l'une quelconque des revendications 1 à 5, dans lequel le stator (231,232) a un intervalle d'air (234) au niveau d'un côté de la bobine (235) et un autre côté de la bobine (235) forme un trajet magnétique, et
dans lequel un centre de l'aimant (236,236a,236b) est situé de manière plus excentrée par rapport à l'espace de compression (141) qu'un centre d'une portion polaire formant l'intervalle d'air (234).

8. Compresseur à va-et-vient selon l'une quelconque des revendications 1 à 7, dans lequel une plage de course maximum du piston (150) est à l'intérieur d'un déplacement auquel la force de rappel a un point d'inflexion.

9. Compresseur à va-et-vient selon l'une quelconque des revendications 1 à 8, dans lequel le ressort à résonance électromagnétique (131,132,135,136) (131',132',135',136') est prévu en pluralité, la pluralité de ressorts à résonance électromagnétique étant agencés le long de la direction de va-et-vient du piston (150).

10. Compresseur à va-et-vient selon l'une quelconque des revendications 1 à 9, dans lequel des aimants auxiliaires (182a, 182b) ayant le même pôle sont prévus en face-à-face au niveau d'une surface latérale du piston (150) dans la direction de va-et-vient du piston (150) et d'un élément correspondant au piston (150), respectivement.

11. Compresseur à va-et-vient selon la revendication 10, dans lequel un support (181) est couplé à un châssis arrière (122) couplé au stator, et
dans lequel les aimants auxiliaires (182a, 182b) sont disposés au niveau d'une surface latérale intérieure du support (181) et d'une surface arrière d'une bride du piston (150) faisant face à la surface latérale intérieure du support (181), respectivement.

12. Compresseur à va-et-vient selon la revendication 1, dans lequel le piston (150) forme un espace de compression (141) conjointement avec le cylindre (140), et effectue un mouvement résonnant lorsque l'aimant (136, 136a, 136b, 136c) (236,236a,236b) reçoit une force de rappel générée en raison d'une différence de niveau magnétique généré dans l'intervalle d'air (134, 134a,134b) (234) du noyau de stator.

13. Compresseur à va-et-vient selon la revendication 12, dans lequel une plage de course maximum du piston (150) est à l'intérieur d'un déplacement auquel la force de rappel a un point d'inflexion.

14. Compresseur à va-et-vient selon la revendication 13,
dans lequel une seconde position du piston est située de manière plus excentrée par rapport à l'espace de compression (141) qu'une première position du piston (150), à supposer qu'un point où un centre électromagnétique de l'aimant (136,136a,136b,136c) (236,236a,236b) et un centre électromagnétique du stator (131,132) (231) (232) correspondent l'un à l'autre est désigné comme étant la première position et qu'une position du piston (150) dans un état assemblé ou arrêté est désignée comme étant la seconde position.
